# EUROPÄISCHE PATENTSCHRIFT

(11) **EP 3 550 169 B1**
(45) Veröffentlichungstag und Bekanntmachung des Hinweises auf die Patenterteilung: **23.09.2020**
(21) Anmeldenummer: 19155944.2
(22) Anmeldetag: 07.02.2019
(51) Int. Cl.: F16D 48/08, F16H 61/688

(54) **VERFAHREN ZUR STEUERUNG UND/ODER REGELUNG DER DOPPELKUPPLUNG EINES DOPPELKUPPLUNGSGETRIEBES EINES KRAFTFAHRZEUGS**
METHOD FOR CONTROLLING AND/OR REGULATING THE DUAL CLUTCH OF A DUAL CLUTCH TRANSMISSION OF A MOTOR VEHICLE
PROCÉDÉ DE COMMANDE ET / OU DE RÉGULATION DE L'EMBRAYAGE DOUBLE D'UNE BOÎTE DE VITESSES À DOUBLE EMBRAYAGE D'UN VÉHICULE AUTOMOBILE

(30) Priorität: 05.03.2018 DE 102018203248
(43) Veröffentlichungstag der Anmeldung: 09.10.2019
(73) Patentinhaber: Volkswagen Aktiengesellschaft, 38436 Wolfsburg (DE)
(72) Erfinder: Bothe, Edgar, 31228 Peine (DE)

(56) Entgegenhaltungen:
- EP-A1- 2 578 906
- DE-A1-102006 006 064
- DE-A1-102014 202 148
- DE-A1-102014 208 557
- DE-A1-102015 204 383

## Beschreibung

Die Erfindung betrifft ein Verfahren zur Steuerung und/oder Regelung der Doppelkupplung eines Doppelkupplungsgetriebes eines Kraftfahrzeuges mit den Merkmalen des Oberbegriffs des Patentanspruches 1.

Im Stand der Technik sind eine Vielzahl von möglichen unterschiedlich gesteuerten und/oder geregelten Anfahrvorgängen bei Kraftfahrzeugen bekannt. Letzteres insbesondere auch bei Kraftfahrzeugen, die ein Doppelkupplungsgetriebe und eine Doppelkupplung aufweisen. Hierbei weist die Doppelkupplung eine erste und eine zweite Reibkupplung auf, wobei die erste und die zweite Reibkupplung auf spezifische Art und Weise angesteuert und/oder geregelt werden können, um einen Anfahrvorgang des Kraftfahrzeugs zu realisieren.

Bei einem Doppelkupplungsgetriebe ist die erste Reibkupplung der Doppelkupplung mit einem ersten Teilgetriebe und die zweite Reibkupplung der Doppelkupplung mit einem zweiten Teilgetriebe des Doppelkupplungsgetriebes wirksam verbunden bzw. dem jeweiligen Teilgetriebe zugeordnet. Hierbei weist das erste Teilgetriebe insbesondere die ungeraden Gangstufen und das zweite Teilgetriebe insbesondere die geraden Gangstufen auf. Während des Anfahrvorganges des Kraftfahrzeugs können beide Reibkupplungen zumindest zeitweise gleichzeitig und/oder zumindest teilweise geschlossen werden. Ein von der Doppelkupplung zu übertragendes Gesamt-Kupplungsmoment wird auf die erste und auf die zweite Kupplung aufgeteilt, wobei dann an der ersten Reibkupplung ein erstes Kupplungsmoment und an der zweiten Reibkupplung ein zweites Kupplungsmoment anliegt. Insbesondere sind derartige Anfahrvorgänge bzw. entsprechende Ansteuerungen und/oder Regelungen der Doppelkupplung eines Doppelkupplungsgetriebes bereits bekannt, wobei im Doppelkupplungsgetriebe während des Anfahrvorganges die erste und die zweite Gangstufe im jeweiligen Teilgetriebe wirksam eingelegt ist und die beiden Reibkupplungen "sich überschneidend" angesteuert werden, um das komfortable Anfahren eines Kraftfahrzeuges zu realisieren.

So wird beispielsweise in der EP 2 578 906 A1 ein Verfahren zur Steuerung einer Doppelkupplung eines Doppelkupplungsgetriebes offenbart, wobei die Kupplungen in einer sich überschneidenden Art und Weise angesteuert werden, um ein entsprechendes Kupplungsmoment auf eine jeweilige Eingangswelle zu übertragen. Hierbei werden die Kupplungen in sich überschneidender Weise bei einem Gangstufenwechsel von der ersten zur zweiten Gangstufe, hier bei einer Schaltung von dem ersten in den zweiten Gang, entsprechend angesteuert.

Weiterhin ist aus der DE 100 15 296 A1 ein Verfahren zum Anfahren eines Kraftfahrzeugs mit einer Doppelkupplung bzw. mit einem Doppelkupplungsgetriebe bekannt, wobei über beide Kupplungen, also über die erste und über die zweite Reibkupplung ein Kupplungsmoment übertragen wird. Hierbei wird über die erste Kupplung ein Kupplungsmoment bzw. ein Drehmoment auf den ersten Gang und über die zweite Reibkupplung ein Kupplungsmoment auf den zweiten Gang übertragen. Hierbei wird dann zeitgleich mit Hilfe des ersten und zweiten Ganges angefahren.

Ferner ist aus der DE 193 08 698 A1 eine Anfahrstrategie für das Doppelkupplungsgetriebe eines Kraftfahrzeugs bekannt, bei der die zweite Reibkupplung in Abhängigkeit von einer vorbestimmten Kupplungs-Temperatur beim Anfahren zur Momentenübertragung verwendet wird.

Schließlich offenbart die DE 10 2006 006064 A1 ein Verfahren zur Ermittlung des aktuellen Greifpunktes einer manuell betätigten Kupplung, die den Fahrer bei dem Fahrzeugstart mittels des ermittelten Greifpunktes der Kupplung unterstützt.

Die im Stand der Technik bekannten Verfahren für Anfahrstrategien bei Doppelkupplungen und/oder bei Doppelkupplungsgetrieben sind noch nicht optimal ausgebildet. Insbesondere die mechanischen und/oder hydraulischen Eigenschaften der Reibkupplungen und der zugehörigen Mechatronik können zu von einem Fahrer als unkomfortabel empfundenen Anfahrvorgang des Kraftfahrzeugs führen. So gilt bisher, dass bei dem Anfahren der Kraftfahrzeuge mit Doppelkupplungsgetrieben durch das geregelte Schließen der jeweiligen Reibkupplung (als Anfahrkupplung) dieses geregelte Schließen bei einem laufenden Verbrennungsmotor erfolgt. Hierbei soll das Schließen der jeweiligen Reibkupplung komfortabel erfolgen und sollte nicht zu einem "Ruck" beim Anfahrvorgang führen. Hierzu wird eine Motordrehzahl eingeregelt, die weder zu hoch (Verbrauch, Akustik, Lärm), noch zu niedrig sein darf (Momentenabgabe, Akustik etc.). Das Motormoment wird - im Endeffekt - über die jeweilige Kupplung an den Rädern abgestützt. Dieses Moment dient zum Vortrieb des Fahrzeugs. Bei einem Doppelkupplungsgetriebe bzw. bei der hier angeordneten Doppelkupplung sind die beiden Reibkupplungen des Doppelkupplungsgetriebes grundsätzlich beide jeweils als Anfahrkupplung ausgelegt bzw. können entsprechend ausgelegt sein, wie bereits oben beschrieben, wobei das Anfahren des Kraftfahrzeugs dann mit Hilfe einer bereits oben erläuterten Strategie zur Ansteuerung der beiden Reibkupplungen im Stand der Technik realisiert wird.

In der Praxis können verschiedene Effekte, wie beispielsweise ein mechanisches Klemmen der Reibkupplung bzw. auch mechanische und/oder auch hydraulische Hysteresen der Hydraulik zu einer Verschlechterung der Steuer- und Regelqualität der jeweiligen verwendeten Komponenten der Reibkupplung / Anfahrkupplung führen. Hieraus ergibt sich eine Verschlechterung des Anfahrverhaltens des Kraftfahrzeugs, insbesondere führt dies zu einem "Ruckeln" des Kraftfahrzeugs bei einem Anfahrvorgang. Das Ruckeln ist um so ausgeprägter je kürzer die Übersetzung des Getriebe ist.

Der Erfindung liegt die Aufgabe zugrunde, eine Anfahrstrategie bzw. ein Verfahren zur Steuerung und/oder Regelung der Doppelkupplung eines Doppelkupplungsgetriebes eines Kraftfahrzeugs für einen Anfahrgang des Kraftfahrzeugs nun derart auszugestalten und/oder weiterzubilden, dass auf kostengünstige Art und Weise das vom Fahrer als unkomfortabel empfundene "Ruckeln" eines Kraftfahrzeugs beim Anfahrvorgang vermieden ist.

Die zuvor gezeigte Aufgabe ist nun für das erfindungsgemäße Verfahren gemäß den Merkmalen des Patentanspruches 1 gelöst.

Hierbei überträgt zunächst in einer ersten Phase bei Beginn des Anfahrvorganges ausschließlich die zweite Reibkupplung ein zweites Kupplungsmoment, wobei in der ersten Phase ein bzw. das Radantriebsmoment ausschließlich mit Hilfe der größeren zweiten Gangstufe realisiert wird. In einer zweiten Phase des Anfahrvorganges wird das Gesamt-Kupplungsmoment der Doppelkupplung auf die erste und auf die zweite Reibkupplung derart aufgeteilt, dass in der zweiten Phase das Radantriebsmoment mit Hilfe der ersten und der zweiten Gangstufe realisiert wird. In einer dritten Phase und/oder zu einem auf die zweite Phase folgenden bestimmten Zeitpunkt überträgt dann ausschließlich die erste Reibkupplung ein erstes Kupplungsmoment, wobei das Radantriebsmoment ausschließlich mit Hilfe der niedrigeren ersten Gangstufe realisiert wird.

Das Grundprinzip ist zunächst die Verteilung des Gesamt-Kupplungsmoments (Stellmoments) der Doppelkupplung auf die beiden Reibkupplungen des Doppelkupplungsgetriebes zumindest teilweise während des Anfahrvorganges, insbesondere während der zweiten Phase. Bei Beginn des Anfahrvorganges wird zunächst mit Hilfe der größeren, zweiten Gangstufe, insbesondere mit Hilfe des zweiten Ganges angefahren, wobei in dieser ersten Phase ausschließlich die zweite Reibkupplung das entsprechende Moment, hier ein zweites Kupplungsmoment überträgt. In dieser ersten Phase ist die erste Reibkupplung also im Wesentlichen vollständig geöffnet. Da schnelle Motor-Momentenänderungen bzw. Gesamt-Kupplungsmoment-Änderungen in der ersten Phase über die zweite Reibkupplung und mit Hilfe der größeren zweiten Gangstufe, insbesondere mit Hilfe des zweiten Ganges auf die Räder übertragen werden und die Übersetzung der größeren zweiten Gangstufe kleiner ist als die Übersetzung der ersten niedrigen Gangstufe, insbesondere des ersten Ganges, führen schnelle Änderungen des Gesamt-Kupplungsmomentes, das in dieser ersten Phase dem zweiten Kupplungsmoment entspricht, zu kleineren Momentenänderungen am Rad selbst. Dies steigert den Fahrtkomfort des Anfahrvorganges. In der oben erwähnten ersten Phase entspricht das zweite Kupplungsmoment daher dem Gesamt-Kupplungsmoment.

In einer zweiten Phase wird das Gesamt-Kupplungsmoment nun auf die erste und auf die zweite Reibkupplung aufgeteilt. Dabei entspricht die Summe aus dem ersten und aus dem zweiten Kupplungsmoment dem Gesamt-Kupplungsmoment. In der zweiten Phase, also bei der Verteilung des Gesamt-Kupplungsmoments auf die der ersten Gangstufe zugeordnete erste Reibkupplung bzw. auf die der zweiten Gangstufe zugeordnete zweite Reibkupplung erfolgt diese Verteilung in der Art, dass das Gesamt-Kupplungsmoment gefiltert wird, wobei dann die der ersten Gangstufe zugeordnete erste Reibkupplung entsprechend mit einem gefilterten ersten Kupplungsmoment beaufschlagt wird und die der zweiten Gangstufe zugeordnete zweite Reibkupplung mit einem zweiten Kupplungsmoment, nämlich mit der Differenz aus dem Gesamt-Kupplungsmoment und dem gefilterten ersten Kupplungsmoment beaufschlagt wird. Dies führt dazu, dass bei einem in erster Näherung konstanten Gesamt-Kupplungsmoment das erste Kupplungsmoment der ersten Reibkupplung sich dem Gesamt-Kupplungsmoment annähert, während das zweite Kupplungsmoment der zweiten Reibkupplung sich dem Nullmoment annähert, nämlich gegen "Null" geht.

In einer dritten Phase und/oder zu einem auf die zweite Phase folgenden bestimmten Zeitpunkt entspricht dann das erste Kupplungsmoment dem Gesamt-Kupplungsmoment, insbesondere ist die zweite Reibkupplung dann vollständig geöffnet und kann keine Kraft / kein Drehmoment übertragen. Das Antriebsmoment wird dann ausschließlich mit Hilfe der niedrigeren ersten Gangstufe, insbesondere mit Hilfe des ersten Ganges über die erste Reibkupplung realisiert. Weitere Hochschaltungen werden bzw. können dann auf die bekannte Art und Weise realisiert werden.

Bei der Realisierung des zuvor genannten erfindungsgemäßen Verfahrens ist die Motordrehzahl größer als die Getriebeeingangswellendrehzahl des ersten Teilgetriebes mit der dazugehörigen niedrigeren ersten Gangstufe. Erst am Ende der zweiten Phase bzw. bei Beginn der dritten Phase erreicht die Drehzahl der Getriebeeingangswelle des ersten Teil-Getriebes die Motordrehzahl.

In einer weiteren vorteilhaften Ausgestaltung weist die zweite Phase drei Unterphasen auf, wobei in einer ersten Unterphase das zweite Kupplungsmoment im Wesentlichen fortlaufend abnimmt, in der zweiten Unterphase im Wesentlichen fortlaufend wieder zunimmt und in der dritten Unterphase im Wesentlichen fortlaufend wieder abnimmt. Hierbei nimmt das erste Kupplungsmoment in der zweiten Phase im Wesentlichen aber fortlaufend zu. Hierdurch wird eine sehr komfortable Anfahrstrategie realisiert.

Erfindungsgemäß wird das Gesamt-Kupplungsmoment bzw. das entsprechende Stellsignal steuerungstechnisch und/oder regeltechnisch zumindest teilweise gefiltert wird nit Hilfe eines Tiefpassfilters. Hierbei wird die erste Reibkupplung mit einem gefilterten ersten Kupplungsmoment-Signal angesteuert, wobei die zweite Reibkupplung dann mit einem zweiten Kupplungsmoment-Signal angesteuert wird, das zweite Kupplungsmoment-Signal aus der Differenz des einzustellenden Gesamt-Kupplungsmoment-Signals und dem ersten Kupplungsmoment-Signal entsprechend ermittelt wird.

Im Ergebnis sind eine Vielzahl von Vorteilen realisiert und die eingangs beschriebenen Nachteile sind vermieden.

Es gibt nun eine Vielzahl von Möglichkeiten, das erfindungsgemäße Verfahren zur Steuerung und/oder Regelung der Doppelkupplung eines Doppelkupplungsgetriebes eines Kraftfahrzeugs in vorteilhafter Art und Weise auszugestalten und weiterzubilden. Hierfür darf zunächst auf die dem Patentanspruch 1 nachgeordneten Patentansprüche verwiesen werden. Im Folgenden darf ein bevorzugtes Ausführungsbeispiel der Erfindung anhand der Zeichnung und der dazugehörigen Beschreibung näher erläutert werden. In der Zeichnung zeigt:

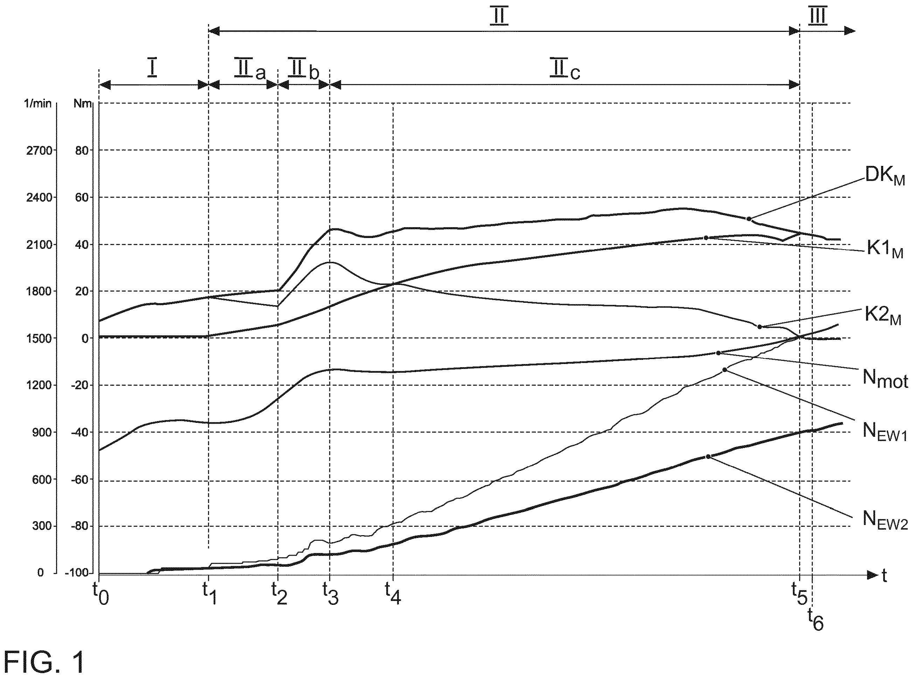

- Fig. 1: in einer schematischen Darstellung die einzelnen Verläufe des Gesamt-Kupplungsmomentes der Doppelkupplung, des ersten und des zweiten Kupplungsmomentes der jeweiligen ersten und zweiten Reibkupplung, den Verlauf der Motordrehzahl und den Verlauf der jeweiligen Drehzahlen der jeweiligen Eingangswellen des jeweiligen Teilgetriebes des Doppelkupplungsgetriebes in schematischer Darstellung für den Anfahrvorgang eines Kraftfahrzeuges innerhalb bestimmter Phasen und/oder Zeiträume bzw. Zeitpunkte, sowie

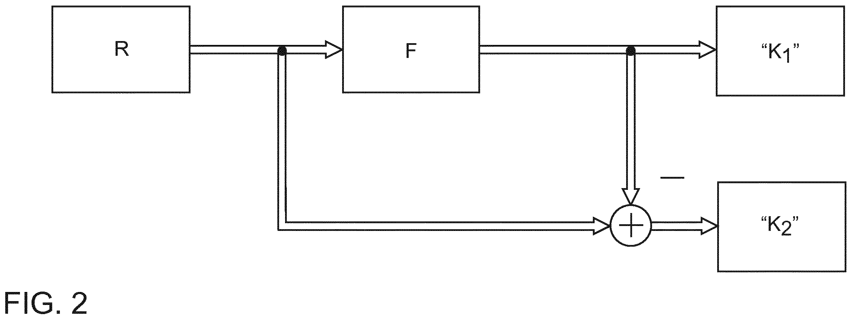

- Fig. 2: eine graphische schematische Darstellung zur Ansteuerung der jeweiligen ersten und zweiten Reibkupplung durch Filterung der Stellsignale.

Anhand der Fig. 1 und 2 darf im Folgenden das Verfahren zur Steuerung und/oder Regelung der Doppelkupplung eines Doppelkupplungsgetriebes eines Kraftfahrzeuges bei einem Anfahrvorgang des Kraftfahrzeugs nun näher beschrieben werden.

Das Doppelkupplungsgetriebe selbst, sowie die Doppelkupplung und/oder das Kraftfahrzeug ist hier nicht im Einzelnen dargestellt.

Der Anfahrvorgang des Kraftfahrzeugs wird mit Hilfe der Doppelkupplung gesteuert und/oder geregelt. Die Doppelkupplung weist mindestens eine erste und mindestens eine zweite Reibkupplung auf. Hierbei ist die erste Reibkupplung einem ersten Teilgetriebe des Doppelkupplungsgetriebes und die zweite Reibkupplung einem zweiten Teilgetriebe des Doppelkupplungsgetriebes zugeordnet.

Die jeweiligen Teilgetriebe des Doppelkupplungsgetriebes, also das erste und zweite Teilgetriebe, weist jeweils eine erste und eine zweite Getriebeeingangswelle auf. Insbesondere weist das erste Teilgetriebe die ungeraden Gangstufen und das zweite Teilgetriebe geraden Gangstufen auf. Zumindest aber weist das erste Teilgetriebe mindestens eine niedrigere, erste Gangstufe und das zweite Teilgetriebe mindestens eine - verglichen mit der ersten Gangstufe - größere, zweite Gangstufe auf. Insbesondere weist daher das erste Teilgetriebe den ersten, dritten und fünften Gang auf, das zweite Teilgetriebe den zweiten, vierten und sechsten Gang auf. Mit dem Begriff "größere Gangstufe" ist eine - im Vergleich zur niedrigeren Gangstufe - Gangstufe gemeint, die eine kleinere Übersetzung aufweist. Die Übersetzung der ersten Gangstufe, insbesondere des ersten Ganges, ist daher größer als die Übersetzung der zweiten Gangstufe, insbesondere des zweiten Ganges.

Während des Anfahrvorganges sind beide Reibkupplungen zumindest zeitweise gleichzeitig und zumindest teilweise geschlossen und/oder auch teilweise vollständig geöffnet oder geschlossen, was im Folgenden noch näher erläutert werden darf.

Ein von der Doppelkupplung zu übertragendes Gesamt-Kupplungsmoment DK_{M}, das auch als "Stellmoment" bezeichenbar ist, wird auf die erste und die zweite Reibkupplung zumindest zeitweise "aufgeteilt", wobei dann an der ersten Reibkupplung ein erstes Kupplungsmoment K1_{M} und an der zweiten Reibkupplung ein zweites Kupplungsmoment K2_{M} anliegt bzw. ein entsprechendes Moment dann auf das jeweilige Teilgetriebe und/oder auf die Räder des Kraftfahrzeugs übertragen wird. Bei dem hier nun geschilderten Verfahren ist die erste und die zweite Gangstufe im jeweiligen Teilgetriebe beim Anfahrvorgang zumindest zeitweise gleichzeitig wirksam eingelegt.

Die übrigen im Stand der Technik bekannten Komponenten, wie Drehzahlsensoren, Motor- und/oder Getriebesteuergeräte sind vorhanden, insbesondere wird das Verfahren zur Steuerung und/oder Regelung der Doppelkupplung des Doppelkupplungsgetriebes des Kraftfahrzeugs mit Hilfe eines hier nicht näher dargestellten elektrischen und/oder elektronischen Steuergerät realisiert. Insbesondere weist das Steuergerät einen Mikroprozessor auf. Weiterhin werden dem Steuergerät alle entsprechenden notwendigen Signale oder Werte, wie Raddrehzahlen, Getriebeeingangswellendrehzahlen, Motordrehzahl Nₘₒₜ, jeweilige Momente oder dergleichen zugeführt bzw. mit Hilfe des Steuergerätes errechnet und/oder ermittelt. So wird auch das zu übertragende Gesamt-Kupplungsmoment DK_{M} der Doppelkupplung (was auch als Sollmoment / Stellmoment der Anfahrregelung bezeichenbar ist) mit Hilfe des Steuergerätes errechnet und/oder ermittelt.

Die eingangs genannten Nachteile sind nun zunächst dadurch vermieden, dass
a) in einer ersten Phase I bei Beginn des Anfahrvorganges ausschließlich die zweite Reibkupplung ein zweites Kupplungsmoment K2_{M} überträgt und in der ersten Phase I ein bzw. das Radantriebsmoment ausschließlich mit Hilfe der größeren zweiten Gangstufe realisiert wird. In dieser ersten Phase I ist die erste Reibkupplung im Wesentlichen vollständig geöffnet, überträgt - wenn überhaupt- insbesondere nur noch ein Schleppmoment.
b) In einer zweiten Phase II des Anfahrvorgangs wird das Gesamt-Kupplungsmoment DK_{M} auf die erste und auf die zweite Reibkupplung derart aufgeteilt, dass in der zweiten Phase II das Radantriebsmoment mit Hilfe der ersten und der zweiten Gangstufe realisiert wird.
c) In einer dritten Phase III und/oder zu einem auf die zweite Phase II folgenden bestimmten Zeitpunkt überträgt dann ausschließlich die erste Reibkupplung ein erstes Kupplungsmoment K1_{M}, wobei das Radantriebsmoment ausschließlich mit Hilfe der niedrigeren, ersten Gangstufe realisiert wird. Hier ist dann der Anfahrvorgang insbesondere beendet.

Durch die oben genannten Verfahrensschritte a) bis c) wird im Wesentlichen für die Anfahrstrategie eine "Robustheit" des Anfahrens in der zweiten Gangstufe mit der "Performance" des Anfahrens in der ersten Gangstufe kombiniert und die damit einhergehenden Vorteile realisiert sind, wie teilweise bereits beschrieben.

In Fig. 1 ist nun dargestellt über die Zeit t mehrere Zeitpunkten t₁ bis t₆ und die Verläufe verschiedener Momente, nämlich das Gesamtkupplungsmoment DK_{M} der Doppelkupplung, das erste und das zweite Kupplungsmoment K1_{M}, K2_{M}, die jeweiligen Drehzahlen, nämlich die Motordrehzahl Nₘₒₜ, die Drehzahlen der ersten und zweiten Getriebeeingangswelle N_{EW1}, N_{EW2} des ersten und zweiten Teilgetriebes des Doppelkupplungsgetriebes bzw. in die jeweilige erste, zweiten und dritte Phase I, II, III, hierauf darf verwiesen werden. Die Darstellung in Fig. 1 dient insbesondere der näheren Erläuterung des erfindungsgemäßen Verfahrens. Fig. 2 zeigt schematisch die Filterung eines Stellsignals.

Der Anfahrvorgang eines Kraftfahrzeugs ist im Allgemeinen der Bereich des Kraftfahrzeugs, der einen Geschwindigkeitsbereich umfasst, in dem beim Schlupfen der jeweiligen Reibkupplung die Motordrehzahl größer ist, als die größte der über die jeweilige Reibkupplung angekoppelten jeweiligen Getriebeeingangswellendrehzahl. Der Anfahrvorgang ist insbesondere dann beendet, wenn die jeweilige Getriebeeingangswellendrehzahl gleich der Motordrehzahl ist. Insbesondere kann das Kraftfahrzeug auch bereits leicht rollen, bevor die Anfahrstrategie realisiert wird, insbesondere Letzteres ist auch mit dem Ausdruck "im Wesentlichen" umfasst.

Wie die Fig. 1 deutlich macht, wird zunächst in der ersten Phase I bei Beginn des Anfahrvorganges zum Zeitpunkt to ausschließlich die zweite Kupplung so angesteuert, dass nur die zweite Reibkupplung ein zweites Kupplungsmoment K2_{M} überträgt und in dieser ersten Phase I das Radantriebsmoment ausschließlich mit Hilfe der größeren zweiten Gangstufe, insbesondere mit Hilfe des zweiten Ganges realisiert wird. Das erste Kupplungsmoment K1_{M} beträgt in dieser ersten Phase I im Wesentlichen "Null" bzw. ein Nullmoment. Die erste Phase I dauert im Wesentlichen bis zum Zeitpunkt t₁.

Zum Zeitpunkt t₁ beginnt die zweite Phase II des Anfahrvorganges. Hier wird das Gesamt-Kupplungsmoment DK_{M} auf die erste und auf die zweite Reibkupplung derart aufgeteilt, dass in der zweiten Phase II das Radantriebsmoment mit Hilfe der ersten und der zweiten Gangstufe, insbesondere mit Hilfe des ersten und zweiten Ganges, realisiert wird. Insbesondere dauert hier die in der Fig. 1 dargestellte zweite Phase II vom Zeitpunkt t₁ im Wesentlichen bis zum Zeitpunkt t₅.

In einer dritten Phase III, insbesondere ab dem Zeitpunkt t5 und/oder zu einem auf die zweite Phase II folgenden bestimmten Zeitpunkt, insbesondere zu einem Zeitpunkt t₆, insbesondere aber ab dem Zeitpunkt t₅ (oder kurz nach dem Zeitpunkt t₅ oder einem danach liegenden Zeitpunkt), wird dann ausschließlich die erste Reibkupplung ein erstes Kupplungsmoment K1_{M} für eine bestimmte Mindest-Zeitdauer übertragen bzw. überträgt diese zumindest für eine bestimmte Zeitdauer ein erstes Kupplungsmoment K1_{M}, wobei dann das Radantriebsmoment in der dritten Phase III ausschließlich mit Hilfe der niedrigeren, ersten Gangstufe realisiert wird.

Wie die Fig. 1 deutlich macht, entspricht das in der ersten Phase I dargestellte zweite Kupplungsmoment K2_{M} dem Gesamt-Kupplungsmoment DK_{M}.

Hingegen entspricht in der zweiten Phase II das Gesamt-Kupplungsmoment DK_{M} der Summe aus dem ersten und zweiten Kupplungsmoment K1_{M} und K2_{M}.

Schließlich entspricht in der dritten Phase III (und/oder zu einem auf die zweite Phase II folgenden bestimmten Zeitpunkt) das erste Kupplungsmoment K1_{M} dem Gesamt-Kupplungsmoment DK_{M}.

Wie die Fig. 1 weiter zeigt, ist die Motordrehzahl Nₘₒₜ zwischen dem Zeitpunkt to und t₅ im Wesentlichen immer größer als die Getriebeeingangswellendrehzahl N_{EW1} des ersten Teilgetriebes mit der zugehörigen niedrigeren ersten Gangstufe. Grundsätzlich sind die Getriebeeingangswellendrehzahlen N_{EW1}, N_{EW2} des ersten und des zweiten Teilgetriebes kleiner als die Motordrehzahl Nₘₒₜ während der ersten und der zweiten Phase I und II. Insbesondere erreicht die Drehzahl N_{EW1} der ersten Getriebeeingangswelle zum Zeitpunkt t₅ die Drehzahl der Motorwelle. Letzteres soll durch den obigen Ausdruck "im Wesentlichen" umfasst sein.

Weiterhin ist ersichtlich, dass insbesondere im Zeitpunkt t₄ hier der Überschneidungspunkt der jeweiligen Kupplungsmomente K1_{M} und K2_{M} liegt.

Allerdings zeigt Fig. 1 auch eine insbesondere weitere bevorzugte Ausführungsform bzw. Ansteuerung bzw. Regelung einer Doppelkupplung des Doppelkupplungsgetriebes. Insbesondere die zweite Phase II weist hier drei Unterphasen IIₐ, II_{b}, II_{c} auf. Diese Unterphasen müssen aber so nicht vorgesehen sein oder realisiert werden, sondern sollen eine weitere bevorzugte Ausführungsform zeigen.

Die Fig. 1 zeigt deutlich, dass in der ersten Unterphase IIₐ das zweite Kupplungsmoment K2_{M} im Wesentlichen fortlaufend abnimmt, wobei in der ersten Unterphase IIₐ das erste Kupplungsmoment K1_{M} fortlaufend zunimmt. In der zweiten Unterphase II_{b} nimmt das zweite Kupplungsmoment K2_{M} fortlaufend wieder zu, wobei in der dritten Unterphase II_{c} das zweite Kupplungsmoment K2_{M} im Wesentlichen fortlaufend wieder abnimmt. Während der zweiten Phase II, insbesondere während der Unterphasen IIₐ, II_{b}, II_{c} nimmt das erste Kupplungsmoment K1_{M} im Wesentlichen fortlaufend zu, so wie aus Fig. 1 ersichtlich. Kurz vor dem Zeitpunkt t₅ kann es, insbesondere beim Verlauf des ersten Kupplungsmomentes K1_{M} zu einem kurzfristigen Abfall kommen, was auch mit dem Ausdruck "im Wesentlichen" noch mit umfasst sein soll.

Fig. 2 zeigt insbesondere ein schaltungstechnisches Schaubild zur Ansteuerung der ersten und der zweiten Reibkupplung über entsprechende Signale, insbesondere mit Hilfe eines Reglers.

Aus Fig. 2 wird deutlich, dass das Gesamt-Kupplungsmoment DK_{M} bzw. das entsprechende Stellsignal bzw. Gesamt-Kupplungsmoment-Stellsignal steuerungstechnisch und/oder regeltechnisch zumindest teilweise gefiltert wird, insbesondere mit Hilfe eines Tiefpassfilters. Die erste Reibkupplung wird mit einem gefilterten ersten Kupplungsmoment-Signal angesteuert, wobei die zweite Reibkupplung dann mit einem zweiten Kupplungsmoment-Signal angesteuert wird. Im Endeffekt wird die zweite Reibkupplung mit der Differenz aus dem einzustellenden Gesamt-Kupplungsmoment DK_{M} und dem ersten Kupplungsmoment K1_{M} entsprechend angesteuert bzw. wird das zweite Kupplungsmoment-Signal aus der Differenz des Gesamt-Kupplungsmoment-Signals und dem ersten Kupplungsmoment-Signal ermittelt, was der Fig. 2 im Endeffekt so entsprechend zu entnehmen ist.

Fig. 2 zeigt einen Regler R, einen Filter F, insbesondere einen Tiefpassfilter sowie die Signalansteuerung "K₁", "K₂" der ersten und zweiten Reibkupplung.

### Bezugszeichenliste

- DK_{M}: Gesamt-Kupplungsmoment
- I: erste Phase
- II: zweite Phase
- IIₐ, II_{b}, II_{c}: Unterphasen
- III: dritte Phase
- t: Zeit
- t₀, t₁, t₂, t₃, t₄, t₅, t₆: Zeitpunkte
- Nₘₒₜ: Motordrehzahl
- N_{EW1}: Drehzahl erste Getriebeeingangswelle
- N_{EW2}: Drehzahl zweite Getriebeeingangswelle
- K1_{M}: erstes Kupplungsmoment
- K2_{M}: zweites Kupplungsmoment
- R: Regler
- F: Filter, Tiefpassfilter
- "K₁": Signalansteuerung erste Reibkupplung
- "K₂": Signalansteuerung zweite Reibkupplung

## Patentansprüche

1. Verfahren zur Steuerung und/oder Regelung der Doppelkupplung eines Doppelkupplungsgetriebes eines Kraftfahrzeuges, wobei der Anfahrvorgang des Kraftfahrzeuges mit Hilfe der Doppelkupplung gesteuert und/oder geregelt wird, wobei die Doppelkupplung eine erste und eine zweite Reibkupplung aufweist, wobei die erste Reibkupplung einem ersten Teilgetriebe und die zweite Reibkupplung einem zweiten Teilgetriebe des Doppelkupplungsgetriebes zugeordnet ist, wobei dem ersten Teilgetriebe mindestens eine niedrige, erste Gangstufe, insbesondere die ungeraden Gangstufen, und dem zweiten Teilgetriebe mindestens eine - verglichen mit der ersten Gangstufe - größere, zweite Gangstufe, insbesondere die geraden Gangstufen, zugeordnet sind, wobei während des Anfahrvorganges beide Reibkupplungen zumindest zeitweise gleichzeitig und zumindest teilweise geschlossen werden und ein von der Doppelkupplung zu übertragenes Gesamt-Kupplungsmoment (DK_{M}) auf die erste und auf die zweite Reibkupplung aufgeteilt wird und dann an der ersten Reibkupplung ein erstes Kupplungsmoment (K1_{M}) und an der zweiten Reibkupplung ein zweites Kupplungsmoment (K2_{M}) anliegt bzw. von der jeweiligen Reibkupplung entsprechend übertragen wird, und wobei während des Anfahrvorganges die erste und die zweite Gangstufe im jeweiligen Teilgetriebe wirksam eingelegt ist, wobei zunächst in einer ersten Phase (I) bei Beginn des Anfahrvorganges ausschließlich die zweite Reibkupplung ein zweites Kupplungsmoment (K2_{M}) überträgt und in der ersten Phase (I) ein Radantriebsmoment ausschließlich mit Hilfe der größeren zweiten Gangstufe realisiert wird, wobei in einer zweiten Phase (II) des Anfahrvorganges das Gesamt-Kupplungsmoment (DK_{M}) auf die erste und zweite Reibkupplung derart aufgeteilt wird, dass in der zweiten Phase (II) das Radantriebsmoment mit Hilfe der ersten und der zweiten Gangstufe realisiert wird, und wobei in einer dritten Phase (III) und/oder zu einem auf die zweite Phase (II) folgendem bestimmten Zeitpunkt (t₅ bzw. t₆) dann ausschließlich die erste Reibkupplung ein erstes Kupplungsmoment (K1_{M}) überträgt und das Radantriebsmoment ausschließlich mit Hilfe der niedrigeren ersten Gangstufe realisiert wird, **dadurch gekennzeichnet, dass** ein Stellsignal für das Gesamt-Kupplungsmoment (DK_{M}) steuerungstechnisch und/oder regeltechnisch zumindest teilweise mit Hilfe eines Tiefpassfilters gefiltert wird, und dass die erste Reibkupplung mit einem gefilterten ersten Kupplungsmoment-Signal angesteuert wird, wobei die zweite Reibkupplung dann mit einem zweiten Kupplungsmoment-Signal angesteuert wird, und wobei das zweite Kupplungsmoment-Signal aus der Differenz aus dem einzustellenden Gesamt-Kupplungsmoment-Signal und dem ersten Kupplungsmoment-Signal ermittelt wird.

2. Verfahren nach Anspruch 1, **dadurch gekennzeichnet, dass** in der ersten Phase (I) das zweite Kupplungsmoment (K2_{M}) dem Gesamt-Kupplungsmoment (DK_{M}) entspricht.

3. Verfahren nach einem der Ansprüche 1 oder 2, **dadurch gekennzeichnet, dass** in der zweiten Phase (II) die Summe aus dem ersten und dem zweiten Kupplungsmoment (K1_{M}, K2_{M}) dem Gesamt-Kupplungsmoment (DK_{M}) entspricht.

4. Verfahren nach einem der Ansprüche 1 bis 3, **dadurch gekennzeichnet, dass** in der dritten Phase (III) und/oder zu einem auf die zweite Phase (II) folgendem bestimmten Zeitpunkt (t₅) das erste Kupplungsmoment (K1_{M}) dem Gesamt-Kupplungsmoment (DK_{M}) entspricht.

5. Verfahren nach einem der Ansprüche 1 bis 4, **dadurch gekennzeichnet, dass** zunächst während der ersten und zweiten Phase (I und II) die Motordrehzahl (Nₘₒₜ) grösser ist als die Getriebeeingangswellendrehzahl (N_{EW1}) des ersten Teilgetriebes mit der zugehörenden niedrigeren ersten Gangstufe.

6. Verfahren nach einem der Ansprüche 1 bis 5, **dadurch gekennzeichnet, dass** die zweite Phase (II) drei Unterphasen (IIₐ, II_{b}, II_{c}) aufweist, wobei in der ersten Unterphase (IIₐ) das zweite Kupplungsmoment (K2_{M}) im Wesentlichen fortlaufend abnimmt, in der zweiten Unterphase (II_{b}) im Wesentlichen fortlaufend wieder zunimmt und in der dritten Unterphase (II_{c}) im Wesentlichen fortlaufend wieder abnimmt.

7. Verfahren nach einem der Ansprüche 1 bis 6, **dadurch gekennzeichnet, dass** das erste Kupplungsmoment (K1_{M}) in der zweiten Phase (II) im Wesentlichen fortlaufend zunimmt.

8. Verfahren nach einem der Ansprüche 1 bis 7, **dadurch gekennzeichnet, dass** in der zweiten Phase, insbesondere bei einem in ersten Näherung konstanten Gesamt-Kupplungsmoment, das erste Kupplungsmoment der der ersten Gangstufe zugeordneten ersten Reibkupplung sich dem Gesamt-Kupplungsmoment annähert, während das zweite Kupplungsmoment der der zweiten Gangstufe zugeordneten zweiten Reibkupplung sich dem Nullmoment nähert.

## Claims

1. Method for controlling and/or regulating the double clutch of a double clutch transmission of a motor vehicle, the start-up procedure of the motor vehicle being controlled and/or regulated with the aid of the double clutch, the double clutch having a first and a second friction clutch, the first friction clutch being assigned to a first subsidiary transmission and the second friction clutch being assigned to a second subsidiary transmission of the double clutch transmission, the first subsidiary transmission being assigned at least one low, first gear stage, in particular the odd gear stages, and the second subsidiary transmission being assigned at least one higher (in comparison with the first gear stage), second gear stage, in particular the even gear stages, the two friction clutches being closed at least temporarily at the same time and at least partially during the start-up procedure, and a total clutch torque (DK_{M}) to be transmitted by the double clutch being split to the first and to the second friction clutch, and a first clutch torque (K1_{M}) then prevailing at the first friction clutch and a second clutch torque (K2_{M}) then prevailing at the second friction clutch, and being transmitted correspondingly by the respective friction clutch, and, during the start-up procedure, the first and the second gear stage being engaged actively in the respective subsidiary transmission, exclusively the second friction clutch first of all transmitting a second clutch torque (K2_{M}) in a first phase (I) at the beginning of the start-up procedure, and a wheel drive torque being realised exclusively with the aid of the higher second gear stage in the first phase (I), the total clutch torque (DK_{M}) being split to the first and second friction clutch in a second phase (II) of the start-up procedure in such a way that the wheel drive torque is realised with the aid of the first and the second gear stage in the second phase (II), and exclusively the first friction clutch then transmitting a first clutch torque (K1_{M}) in a third phase (III) and/or at a defined time (t₅ or t₆) which follows the second phase (II), and the wheel drive torque being realised exclusively with the aid of the lower first gear stage, **characterized in that** an actuating signal for the total clutch torque (DK_{M}) is filtered in terms of control and/or regulation technology at least partially with the aid of a low pass filter, and **in that** the friction clutch is actuated by way of a filtered first clutch torque signal, the second friction clutch then being actuated by way of a second clutch torque signal, and the second clutch torque signal being determined from the difference of the total clutch torque signal to be set and the first clutch torque signal.

2. Method according to Claim 1, **characterized in that**, in the first phase (I), the second clutch torque (K2_{M}) corresponds to the total clutch torque (DK_{M}).

3. Method according to either of Claims 1 and 2, **characterized in that**, in the second phase (II), the sum of the first and the second clutch torque (K1_{M}, K2_{M}) corresponds to the total clutch torque (DK_{M}).

4. Method according to one of Claims 1 to 3, **characterized in that**, in the third phase (III) and/or at a defined time (t₅) which follows the second phase (II), the first clutch torque (K1_{M}) corresponds to the total clutch torque (DK_{M}).

5. Method according to one of Claims 1 to 4, **characterized in that**, during the first and second phase (I and II), initially the engine rotational speed (Nₘₒₜ) is higher than the transmission input shaft rotational speed (N_{EW1}) of the first subsidiary transmission with the associated lower first gear stage.

6. Method according to one of Claims 1 to 5, **characterized in that** the second phase (II) has three sub-phases (IIₐ, II_{b}, II_{c}), the second clutch torque (K2_{M}) decreasing substantially continuously in the first sub-phase (IIₐ), increasing substantially continuously again in the second sub-phase (II_{b}), and decreasing substantially continuously again in the third sub-phase (II_{c}).

7. Method according to one of Claims 1 to 6, **characterized in that** the first clutch torque (K1_{M}) increases substantially continuously in the second phase (II) .

8. Method according to one of Claims 1 to 7, **characterized in that**, in the second phase, in particular in the case of a total clutch torque which is constant in a first approximation, the first clutch torque of the first friction clutch which is assigned to the first gear stage approaches the total clutch torque, while the second clutch torque of the second friction clutch which is assigned to the second gear stage approaches zero torque.

## Revendications

1. Procédé de commande et/ou de réglage du double embrayage d'une boîte de vitesses à double embrayage d'un véhicule automobile, l'opération de démarrage du véhicule automobile étant commandée et/ou réglée à l'aide du double embrayage, le double embrayage présentant un premier et un deuxième embrayage à friction, le premier embrayage à friction étant associé à une première boîte de vitesses partielle et le deuxième embrayage à friction étant associé à une deuxième boîte de vitesses partielle de la boîte de vitesses à double embrayage, au moins un premier rapport de vitesse bas, en particulier les rapports de vitesses impairs, étant associé à la première boîte de vitesses partielle et au moins un deuxième rapport de vitesse plus élevé par rapport au premier rapport de vitesse, en particulier les rapports de vitesses pairs, étant associé à la deuxième boîte de vitesses partielle, les deux embrayages à friction étant au moins en partie fermés simultanément au moins temporairement pendant l'opération de démarrage et un couple d'embrayage total (DK_{M}) devant être transmis par le double embrayage étant divisé en le premier et le deuxième embrayage partiel, puis un premier couple d'embrayage (K1_{M}) s'appliquant au premier embrayage à friction et un deuxième couple d'embrayage (K2_{M}) s'appliquant au deuxième embrayage à friction, ou étant transmis de manière correspondante par l'embrayage à friction respectif, et pendant l'opération de démarrage, le premier et le deuxième rapport de vitesse étant enclenchés de manière active dans la boîte de vitesses partielle respective, tout d'abord, dans une première phase (I), au début de l'opération de démarrage, exclusivement le deuxième embrayage à friction transmettant un deuxième couple d'embrayage (K2_{M}) et dans la première phase (I), un couple d'entraînement de roue étant réalisé exclusivement à l'aide du deuxième rapport de vitesse plus élevé, dans une deuxième phase (II) de l'opération de démarrage, le couple d'embrayage total (DK_{M}) étant divisé en le premier et le deuxième embrayage à friction, de telle sorte que dans la deuxième phase (II), le couple d'entraînement de roue soit réalisé à l'aide du premier et du deuxième rapport de vitesse, et dans une troisième phase (III) et/ou à un instant déterminé (t_{S} ou t₆) suivant la deuxième phase (II), le premier embrayage à friction transmettant alors exclusivement un premier couple d'embrayage (K1_{M}) et le couple d'entraînement de roue étant réalisé exclusivement à l'aide du premier rapport de vitesse plus bas, **caractérisé en ce qu'**un signal de commande pour le couple d'embrayage total (DK_{M}) est filtré par une technique de commande et/ou par une technique de réglage au moins en partie à l'aide d'un filtre passe-bas, et **en ce que** le premier embrayage à friction est commandé avec un premier signal de couple d'embrayage filtré, le deuxième embrayage à friction étant ensuite commandé avec un deuxième signal de couple d'embrayage et le deuxième signal de couple d'embrayage étant déterminé à partir de la différence entre le signal de couple d'embrayage total à ajuster et le premier signal de couple d'embrayage.

2. Procédé selon la revendication 1, **caractérisé en ce que** dans la première phase (I), le deuxième couple d'embrayage (K2_{M}) correspond au couple d'embrayage total (DK_{M}).

3. Procédé selon l'une quelconque des revendications 1 et 2, **caractérisé en ce que** dans la deuxième phase (II), la somme du premier et du deuxième couple d'embrayage (K1_{M}, K2_{M}) correspond au couple d'embrayage total (DK_{M}).

4. Procédé selon l'une quelconque des revendications 1 à 3, **caractérisé en ce que** dans la troisième phase (III) et/ou à un instant déterminé (t₅) suivant la deuxième phase (II), le premier couple d'embrayage (K1_{M}) correspond au couple d'embrayage total (DK_{M}) .

5. Procédé selon l'une quelconque des revendications 1 à 4, **caractérisé en ce que** tout d'abord pendant la première et la deuxième phase (I et II), la vitesse de rotation du moteur (Nₘₒₜ) est supérieure à la vitesse de rotation de l'arbre d'entrée de boîte de vitesses (N_{EW1}) de la première boîte de vitesses partielle avec le premier rapport de vitesse plus bas associé.

6. Procédé selon l'une quelconque des revendications 1 à 5, **caractérisé en ce que** la deuxième phase (II) présente trois sous-phases (IIₐ, II_{b}, II_{c}), le deuxième couple d'embrayage (K2_{M}), dans la première sous-phase (IIₐ), diminuant essentiellement en continu, dans la deuxième sous-phase (II_{b}), augmentant à nouveau essentiellement en continu et dans la troisième sous-phase (II_{c}), diminuant à nouveau essentiellement en continu.

7. Procédé selon l'une quelconque des revendications 1 à 6, **caractérisé en ce que** le premier couple d'embrayage (K1_{M}) augmente essentiellement en continu dans la deuxième phase (II).

8. Procédé selon l'une quelconque des revendications 1 à 7, **caractérisé en ce que** dans la deuxième phase, en particulier dans le cas d'un couple d'embrayage total constant à première approximation, le premier couple d'embrayage du premier embrayage à friction associé au premier rapport de vitesse se rapproche du couple d'embrayage total, tandis que le deuxième couple d'embrayage du deuxième embrayage à friction associé au deuxième rapport de vitesse se rapproche d'un couple nul.
